# EUROPÄISCHE PATENTSCHRIFT

(11) **EP 1 382 571 B1**
(45) Veröffentlichungstag und Bekanntmachung des Hinweises auf die Patenterteilung: **28.12.2005**
(21) Anmeldenummer: 03015714.3
(22) Anmeldetag: 09.07.2003
(51) Int. Cl.: C01G 49/02, C01G 49/06

(54) **Verfahren zur Herstellung von Eisenhydroxid, Eisenoxidhydrat oder Eisenoxid aus Filtersalzen der Dünnsäurerückgewinnung**
Method for producing iron hydroxide, hydrated iron oxide and iron oxide from filter salts obtained by the recovery of waste acids
Procédé de préparation de l'hydroxyde de fer, de l'oxyde de fer hydraté et de l'oxyde de fer à partir de sels filtrés obtenus par la récupération d'acides résiduels

(30) Priorität: 16.07.2002 DE 10232069
(43) Veröffentlichungstag der Anmeldung: 21.01.2004
(73) Patentinhaber: Sachtleben Chemie GmbH, 47198 Duisburg (DE)
(72) Erfinder: Gosch, Bodo, 45701 Herten (DE)
(74) Vertreter: Uppena, Franz

(56) Entgegenhaltungen:
- WO-A-99/48808
- GB-A- 1 406 945
- JP-A- 1 208 331
- US-A- 4 889 697
- US-B1- 6 179 908

## Beschreibung

Die Erfindung betrifft ein Verfahren zur Herstellung von Eisenhydroxid, Eisenoxidhydrat oder Eisenoxid aus Filtersalzen der Dünnsäurerückgewinnung.

Bei der Produktion von Titandioxid nach dem Sulfatverfahren fällt sogenannte Dünnsäure an. Dünnsäure besteht im wesentlichen aus verdünnter Schwefelsäure, die gelöste Salze (hauptsächlich Eisensalze) enthält. Bei der industriellen Rückgewinnung der Dünnsäure wird diese eingedampft, und es fallen Filtersalzen, bzw. Grünsalzen aus, die abgetrennt werden. Die Filtersalze fallen dabei in großen Mengen an und können wegen ihrer Nebenbestandteile nicht ohne weiteres technisch genutzt werden, sondern müssen oftmals teuer entsorgt werden.

Die WO 99/48808 beschreibt die Umsetzung von Dünnsäure zu anderen Stoffen (wie Gips und Eisenoxid-Pigmenten).

Aufgabe der Erfindung ist es, die Nachteile des Standes der Technik zu überwinden und insbesondere ein Verfahren zu schaffen, mit dem sich aus den Filtersalzen der Dünnsäurerückgewinnung Eisenhydroxid oder Eisenoxid mit einem Gehalt von > 90 Gew.-% Fe₂O₃ gewinnen lässt.

Gelöst wird die Aufgabe durch ein Verfahren zur Herstellung von Eisenhydroxid, Eisenoxidhydrat oder Eisenoxid aus Filtersalzen der Dünnsäurerückgewinnung, bei dem die Filtersalze in Wasser gelöst werden, die Lösung auf einen pH-Wert von < 1, bevorzugt < 0,5 eingestellt wird, anschließend durch Zugabe einer starken Base unter Rühren ein pH-Wert von 2 bis 4, bevorzugt 3 bis 3,8 eingestellt wird, die dabei ausfallenden Stoffe in bekannter Weise abgetrennt werden, die verbleibende Lösung unter Zugabe einer starken Base und/oder eines Oxidationsmittels auf einen pH-Wert von 6 bis 8 eingestellt wird, das ausfallende Eisenhydroxid oder Eisenoxidhydrat aus der Lösung abgetrennt, gewaschen, getrocknet und gegebenenfalls zu Eisenoxid getrocknet und/oder geglüht wird.

Je nachdem, wie viel Dünnsäure dem Filtersalz anhaftet, hat die Filtersalzlösung bereits einen pH-Wert von < 1 und muss dann nicht separat eingestellt werden. Ansonsten wird zur Einstellung des pH-Wertes bevorzugt Schwefelsäure oder Dünnsäure verwendet. Die Filtersalzlösung enthält bevorzugt 200 bis 350 g Feststoff pro kg Lösung.

Als starke Base wird bevorzugt eine Alkalimetallhydroxidlösung verwendet, besonders bevorzugt ist Natronlauge oder Kalilauge. Die bei einem pH-Wert von 2 bis 4 ausfallenden Stoffe enthalten hauptsächlich Metatitansäure. Bevorzugt wird diese wieder dem Titandioxidprozess zugeführt.

Als Oxidationsmittel werden bevorzugt Luft, Sauerstoff oder Wasserstoffperoxid (H₂O₂) eingesetzt. Bei Verwendung von Luft oder Sauerstoff werden diese in die Lösung eingeblasen.

Die Glüh- oder Trockentemperatur beträgt bevorzugt 200 bis 1300 °C, besonders bevorzugt 300 bis 1300 °C und ganz besonders bevorzugt 600 bis 1200 °C. Die Glühung/Trocknung kann auch unter Vakuum durchgeführt werden.

Der Vorteil des erfindungsgemäßen Verfahrens liegt darin, dass qualitativ hochwertiges Eisenhydroxid oder Eisenoxidhydrat, bzw. nach Glühung Eisenoxid mit einem Gehalt von > 90 Gew.-% Fe₂O₃ erhalten wird. Um den Anteil des als Verunreinigung enthaltenen Schwefels im Eisenoxid zu senken, wird die Waschung des ausgefallenen Eisenhydroxids bevorzugt so lange wiederholt, bis die elektrische Leitfähigkeit im Waschfiltrat unter 200 µS/cm⁻¹, besonders bevorzugt unter 150 µS/cm⁻¹ gefallen ist. Auf diese Weise wird nach Glühung ein Eisenoxid mit einem Gehalt von > 94 Gew.-% Fe₂O₃ erhalten.

Die Erfindung wird im folgenden anhand von einem Beispiel näher erläutert.

### Beispiel 1:

Durch Auflösen von 5 kg Filtersalzen aus der Dünnsäurerückgewinnung in 10 l Wasser wurde eine wässrigen Filtersalzlösung hergestellt. Diese Lösung hatte einen pH-Wert von 0. Das heißt, den Filtersalzen haftete genügend Säure an, so dass eine separate Säurezugabe nicht notwendig war. Die Temperatur der Lösung betrug ca. 23 °C. Die Lösung wurde unter Rühren mit ca. 150 ml 50 %-iger Natronlauge auf einen pH-Wert von 3,5 eingestellt. Dabei stieg die Temperatur der Lösung auf 55 °C an. Nach einer 2 stündigen Reifephase bei ca. 40 °C wurden die ausgefallenen Feststoffe über einer Nutsche vom Filtrat getrennt. Das Filtrat kühlte sich während der Fest-Flüssig-Trennung auf ca. 25 °C ab. Die Filtratlösung wurde anschließend wieder mit 180 ml 50 %-iger NaOH unter turbulentem Rühren, wobei Luftsauerstoff in die Lösung gelangte, auf einen pH-Wert von 7,8 eingestellt. Dabei fiel Eisenhydroxid aus. Dieses wurde mittels Nutsche von der Lösung abgetrennt mit ca. 30 l Wasser, welches eine Temperatur von 60 °C hatte, gewaschen. Es wurden 3,5 kg feuchtes Eisenhydroxid gewonnen. Anschließend wurde das Eisenhydroxid bei 105 °C im Trockenschrank 12 Stunden getrocknet und danach 2 Stunden bei 600 °C in einem Laborofen unter Luftatmosphäre geglüht. Das erhaltene Eisenoxid hatte einen Gehalt von 94,4 % Fe₂O₃.

## Patentansprüche

1. Verfahren zur Herstellung von Eisenhydroxid, Eisenoxidhydrat oder Eisenoxid aus Filtersalzen der Dünnsäurerückgewinnung, **dadurch gekennzeichnet, dass** die Filtersalze in Wasser gelöst werden, die Lösung auf einen pH-Wert von < 1 eingestellt wird, anschließend durch Zugabe einer starken Base unter Rühren ein pH-Wert von 2 bis 4 eingestellt wird, die dabei ausfallenden Stoffe in bekannter Weise abgetrennt werden, die verbleibende Lösung unter Zugabe einer starken Base und/oder eines Oxidationsmittels auf einen pH-Wert von 6 bis 8 eingestellt wird, das ausfallende Eisenhydroxid oder Eisenoxidhydrat aus der Lösung abgetrennt, gewaschen, getrocknet und gegebenenfalls zu Eisenoxid getrocknet und/oder geglüht wird.

2. Verfahren nach Anspruch 1, **dadurch gekennzeichnet, dass** zur Einstellung des pH-Wertes von < 1 bevorzugt Schwefelsäure oder Dünnsäure verwendet wird.

3. Verfahren nach Anspruch 1 oder 2, **dadurch gekennzeichnet, dass** als starke Base eine Alkalimetallhydroxidlösung verwendet wird.

4. Verfahren nach Anspruch einem der Ansprüche 1 bis 3, **dadurch gekennzeichnet, dass** als Oxidationsmittel Luft, Sauerstoff oder H₂O₂ verwendet wird.

5. Verfahren nach Anspruch einem der Ansprüche 1 bis 4, **dadurch gekennzeichnet, dass** die Glüh- oder Trockentemperatur 200 bis 1300 °C beträgt.

## Claims

1. Process for the production of iron hydroxide, iron oxide hydrate or iron oxide from filtration salts in the recovery of weak acid, **characterized in that** the filtration salts are dissolved in water, the solution is adjusted to a pH of <1, the pH is then adjusted to 2 to 4 by the addition of a strong base, with stirring, the substances that precipitate are separated off in known manner, the remaining solution is adjusted to a pH of 6 to 8 by the addition of a strong base and/or an oxidizing agent, and the iron hydroxide or iron oxide hydrate that precipitates is separated from the solution, washed, dried and optionally dried and/or calcined to iron oxide.

2. Process according to Claim 1, **characterized in that** the pH is preferably adjusted to <1 using sulfuric acid or weak acid.

3. Process according to Claim 1 or 2, **characterized in that** the strong base used is an alkali metal hydroxide solution.

4. Process according to one of Claims 1 to 3, **characterized in that** the oxidizing agent used is air, oxygen or H₂O₂.

5. Process according to one of Claims 1 to 4, **characterized in that** the calcination or drying temperature is 200 to 1300°C.

## Revendications

1. Procédé de préparation d'hydroxyde de fer, d'oxyde de fer hydraté ou d'oxyde de fer à partir de sels de filtration provenant de la récupération d'acide dilué, **caractérisé en ce que** l'on dissout les sels de filtration dans de l'eau, on règle le pH de la solution à une valeur inférieure à 1, puis on règle le pH à une valeur de 2 à 4 par addition d'une base forte en agitant, on sépare en opérant d'une manière connue les produits qui précipitent alors, on règle le pH de la solution restante à une valeur de 6 à 8 par addition d'une base forte et/ou d'un oxydant, on sépare de la solution l'hydroxyde de fer ou l'oxyde de fer hydraté qui précipite, on le lave, on le sèche et éventuellement on le déshydrate et/ou on le calcine pour le transformer en oxyde de fer.

2. Procédé selon la revendication 1, **caractérisé en ce que** l'on utilise de préférence de l'acide sulfurique ou de l'acide dilué pour amener le pH à une valeur inférieure à 1.

3. Procédé selon la revendication 1 ou 2, **caractérisé en ce que** l'on utilise comme base forte une solution d'hydroxyde de métal alcalin.

4. Procédé selon l'une quelconque des revendications 1 à 3, **caractérisé en ce que** l'on utilise comme oxydant de l'air, de l'oxygène, ou H₂O₂.

5. Procédé selon l'une quelconque des revendications 1 à 4, **caractérisé en ce que** la température de calcination ou de déshydratation est de 200 à 1300 °C.
